# FASCICULE DE BREVET EUROPEEN

(11) **EP 2 179 209 B1**
(45) Date de publication et mention de la délivrance du brevet: **09.10.2013**
(21) Numéro de dépôt: 08844407.0
(22) Date de dépôt: 08.08.2008
(51) Int. Cl.: F16L 27/108

(54) **NACELLE DE TURBORÉACTEUR AVEC UN JOINT D'ETANCHEITE A APPUI INTEGRE**
TURBOSTRAHL-TRIEBWERKSGONDEL MIT EINE DICHTUNGSVERBINDUNG MIT INTEGRIERTER FUGENOBERFLÄCHE
TURBOJET ENGINE NACELLE HAVING A SEALING JOINT WITH INTEGRATED MATING SURFACE

(30) Priorité: 20.08.2007 FR 0705898
(43) Date de publication de la demande: 28.04.2010
(73) Titulaire: Aircelle, 76700 Gonfreville l'Orcher (FR)
(72) Inventeur: BUNEL, Serge, F-76610 Le Havre (FR)
(74) Mandataire: Jouanneau, Lionel
(86) Numéro de dépôt international: PCT/FR2008/001180
(87) Numéro de publication internationale: WO 2009/056698

(56) Documents cités:
- EP-A- 0 320 325
- EP-A2- 0 838 615
- FR-A- 2 643 699
- GB-A- 2 017 244
- US-A- 3 566 510
- US-A- 4 449 742
- US-A- 4 732 413
- US-A- 5 101 621
- US-A- 5 484 173
- US-A1- 2007 052 230

## Description

L'invention se rapporte à une nacelle pour turboréacteur comprenant un joint d'étanchéité destiné à être interposé entre deux éléments de conduit susceptibles d'être animés de mouvements relatifs dans ladite nacelle.

Un aéronef est propulsé par plusieurs turboréacteurs logés chacun dans une nacelle ; chaque nacelle abrite également un ensemble de dispositifs annexes liés à son fonctionnement et assurant diverses fonctions lorsque le turboréacteur est en fonctionnement ou à l'arrêt.

Une nacelle présente généralement une structure tubulaire comprenant une entrée d'air en avant d'un turboréacteur, une section médiane destinée à entourer une soufflante du turboréacteur, une section arrière pouvant éventuellement embarquer des moyens d'inversion de poussée et destinée à entourer la chambre de combustion du turboréacteur, et une tuyère d'éjection dont la sortie est située en aval du turboréacteur.

Les nacelles modernes sont souvent destinées à abriter un turboréacteur double flux apte à générer par l'intermédiaire des pales de la soufflante en rotation un flux d'air chaud (également appelé flux primaire) issu de la chambre de combustion du turboréacteur.

Une nacelle présente classiquement une structure externe, dite Outer Fixed Structure (OFS), qui définit, avec une structure interne concentrique, dite Inner Fixed Structure (IFS), comportant un capot entourant la structure du turboréacteur proprement dite en arrière de la soufflante, un canal annulaire d'écoulement, encore appelé veine, visant à canaliser un flux d'air froid, dit secondaire, qui circule à l'extérieur du turboréacteur. Les flux primaire et secondaire sont éjectés du turboréacteur par l'arrière de la nacelle.

Chaque ensemble propulsif de l'avion est ainsi formé par une nacelle et un turboréacteur, et est suspendu à une structure fixe de l'avion, par exemple sous une aile ou sur le fuselage, par l'intermédiaire d'un pylône ou d'un mât rattaché au turboréacteur ou à la nacelle.

La section arrière de la structure externe de la nacelle est usuellement formée de deux capots de forme sensiblement hémicylindrique, de part et d'autre d'un plan vertical longitudinal de symétrie de la nacelle, et montés mobiles de manière à pouvoir se déployer entre une position de fonctionnement et une position de maintenance qui donne accès au turboréacteur.

Les deux capots sont généralement montés pivotants autour d'un axe longitudinal formant charnière en partie supérieure (à 12 heures) de l'inverseur. Les capots sont maintenus en position de fermeture au moyen de verrous disposés le long d'une ligne de jonction située en partie inférieure (à 6 heures).

Il en va généralement de même pour la section médiane qui présente également la capacité de s'ouvrir pour permettre un accès à la soufflante.

Un exemple connu est divulgué dans EP 0838615 A2.

On constate donc qu'un ensemble propulseur d'avion intègre des sous ensembles fonctionnels qui possèdent des mouvements relatifs et entre lesquels il convient de gérer l'étanchéité.

Plus particulièrement, il convient de noter que les sections arrière et médiane comprennent respectivement des sous-ensembles servant de carter à la tuyère et de carter à la soufflante, zones de l'ensemble propulsif jouant un rôle important dans la génération et l'orientation des flux.

Ces sous-ensembles sont soumis à des températures qui entraînent leur dilation et causent des déformations, notamment radiales.

Ainsi, alors que l'intervalle entre le carter de soufflante et les aubes de ladite soufflante doit être maîtrisé pour assurer une efficacité optimale de la soufflante, une dilatation radiale du carter risque d'entraîner une augmentation de cet intervalle et par voie de conséquence une diminution des performances de soufflante puisque plus d'air non compressé s'échappera par ce jeu.

Dans le but de prévenir cet inconvénient, le carter de soufflante est équipé d'un circuit de distribution d'air froid à sa surface, cet air froid étant généralement prélevé par une écope située dans une zone de circulation du flux froid (zone veine).

Ce principe s'applique également à d'autre partie de la nacelle, telle que la tuyère.

On notera également qu'en fonctionnement les sous-ensembles peuvent être soumis à des déformations longitudinales dont il convient également de s'affranchir.

Comme évoqué précédemment, en raison des ruptures entre les sous-ensembles, les conduits de distribution d'air courent sur plusieurs sous-ensembles et sont également soumis à des ruptures de continuité au niveau desquelles l'étanchéité doit être assurée par l'intermédiaire d'un joint.

Les joints étant réalisés généralement soit à partir de silicone soit à partir d'un matériau tressé, ils présentent une certaine fragilité à l'usure, aux frottements et cisaillement ainsi qu'une faible tenue à l'écrasement.

Or, compte tenu de la grande dimension des pièces, les sous-ensembles peuvent en fonctionnement connaître des déplacements relatifs importants. Un joint interposé entre deux tels sous-ensemble doit donc créer une barrière d'étanchéité quelle que soit la position relative d'un sous-ensemble par rapport à l'autre. Compte tenu du coefficient d'écrasement des joints connus et de l'amplitude du déplacement dont il convient d'assurer l'étanchéité, il s'avère que les joints connus ne peuvent pas valablement assurer cette étanchéité en toute circonstance et on risque d'obtenir une mauvaise connexion entre les parties de conduit et altérer l'écoulement perturber du fluide voire créer des fuites.

La présente invention a pour but de remédier à tout ou partie des inconvénients évoqués précédemment consiste pour ce faire en une nacelle pour turboréacteur comprenant un joint d'étanchéité selon la revendication 1.

Ainsi, en prévoyant une surface d'appui, c'est-à-dire non fixée dans une extrémité correspondante d'un conduit contrairement à la surface de montage, équipée d'un renfort périphérique s'étendant radialement, ce dernier vient faire office d'écran protégeant la partie centrale. Les efforts de cisaillement et de friction dus aux déplacements latéraux de axiaux seront supportés par la plaque renfort au lieu d'être supportés par la matière fragile souple constituant la partie centrale du joint.

Une telle disposition permet de minimiser la surface de contact entre la surface d'appui et le deuxième conduit, les deux étant susceptibles de se déplacer relativement l'un par rapport à l'autre.

En outre, lorsque le joint est soumis à un effort en compression, la partie centrale, également appelée jupe, aura naturellement tendance à s'écraser et à former des bourrelets qui risquent de dépasser de l'espace global du joint et venir au contact du deuxième conduit ou d'une autre surface. Ceci n'est pas souhaitable, car des mouvements relatifs risqueraient alors d'endommager la jupe, et non plus seulement la surface d'appui. La plaque renfort permet de contenir ces éventuels débordements de la partie centrale en cas d'écrasement.

Par ailleurs, on notera que la plaque renfort est localisée au niveau de la surface d'appui. Elle n'altère donc pas la souplesse générale du joint et n'influence pas les efforts en compression.

De cette manière, la jupe du joint ne vient plus en contact direct avec la surface d'appui du deuxième conduit mais est protégée par la plaque renfort qui présente une meilleure résistance à l'usure.

Avantageusement, surface de montage est réalisée à partir d'un anneau de fixation présentant des trous destinés à recevoir des moyens de fixation aptes à coopérer avec des alésages correspondants du premier conduit.

De manière préférentielle, la partie centrale étanche est réalisée à partir de silicone.

Alternativement ou de manière complémentaire, la partie centrale étanche est réalisée à partir de fibres de verre et/ou de céramiques.

Alternativement ou de manière complémentaire encore, la partie centrale étanche est réalisée à partir de fibres aramides.

De manière préférentielle, les fibres sont tissées.

Avantageusement, le renfort est une tôle réalisée à partir d'acier inox.

De manière préférentielle, le renfort comprend une partie périphérique intégrée dans la masse du joint. Ainsi, une partie du joint pourra être moulé autour d'une partie de la surface renfort.

Avantageusement, le renfort présente une surface ajourée. Ceci minimise la masse du renfort et donc la masse supplémentaire du joint selon l'invention par rapport à un joint selon l'art antérieur.

Avantageusement, le renfort présente un bord périphérique externe muni d'un bord tombé ou d'un raidissement local. Une telle caractéristique améliore la raideur générale du renfort et permet ainsi de minimiser ses déformations, notamment en cas de feu et par conséquent d'éviter d'éventuelles fuites au niveau de sa face d'appui.

Conformément à l'invention, la partie centrale comprend une surface externe et une surface interne périphériques délimitant un espace intérieur creux. Une telle structure permet une meilleure tolérance du joint à l'écrasement. De manière générale, le joint peut être constitué de plusieurs parois.

Avantageusement, le renfort présente une partie périphérique externe raidie.

Bien évidemment, le joint peut être indifféremment fixé sur le premier ou le deuxième conduit. Dans l'application ici plus particulièrement concernée, le joint pourra être indifféremment fixée sur l'écope ou sur le conduit côté moteur.

Pour sa bonne compréhension, l'invention est décrite en référence au dessin ci annexé représentant à titre d'exemple non limitatif une forme de réalisation d'un joint d'étanchéité selon celle-ci.
La figure 1 est une vue schématique en perspective d'une demi-coquille d'une structure arrière d'une nacelle de turboréacteur.
La figure 2 est une vue agrandie du joint montré dans son environnement sur la figure 1.

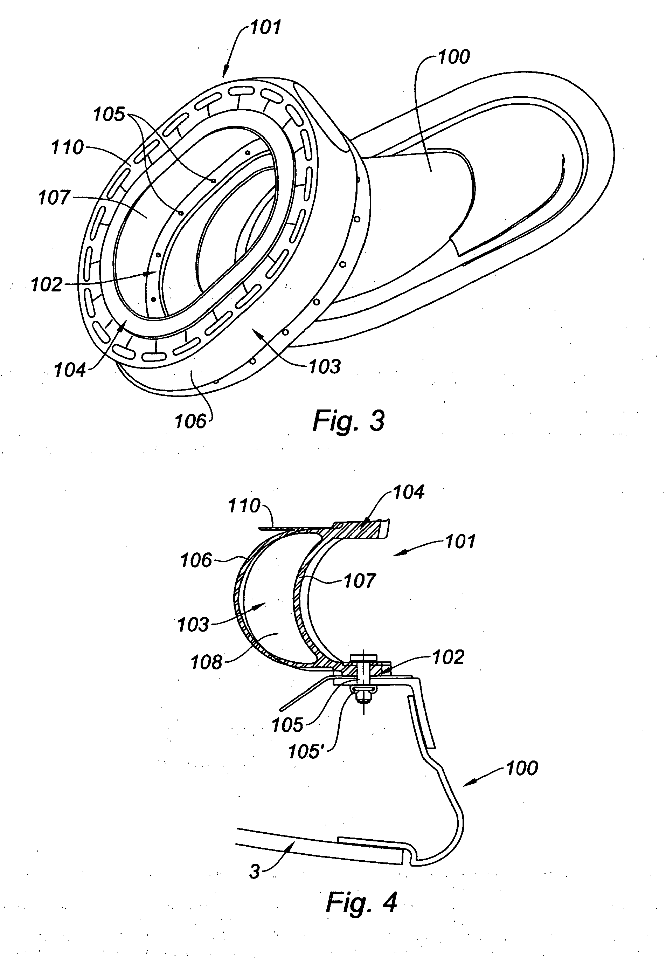

La figure 3 est une représentation en perspective du joint selon l'invention.
La figure 4 est une vue partielle en coupe transversale du joint de la figure 3.

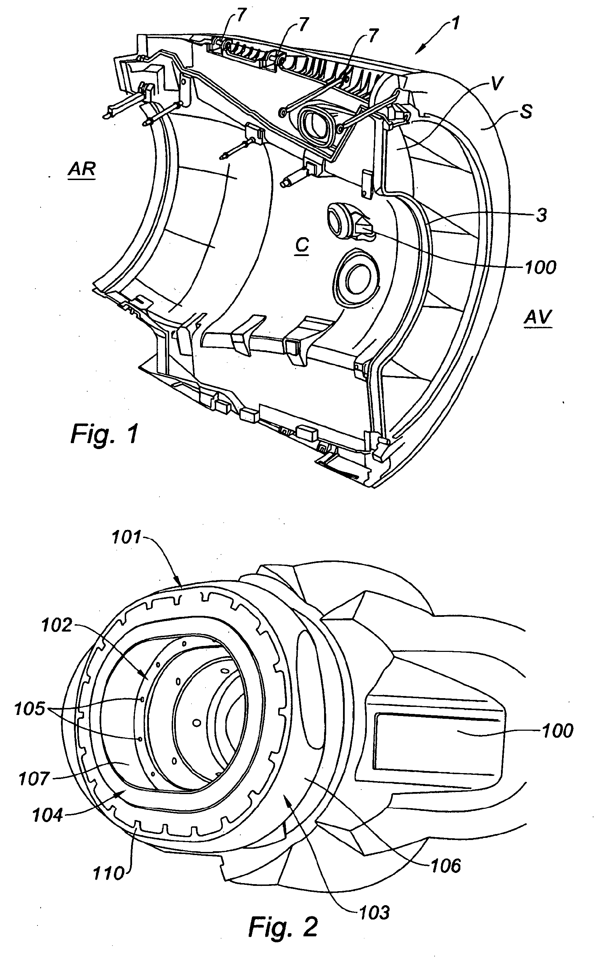

En se reportant à la figure 1, on peut voir une demi-coquille droite 1 de nacelle, qui en l'espèce est destinée à être positionnée à l'arrière d'une nacelle, et constitue avec une deuxième demi-coquille, une structure arrière de nacelle apte à venir entourer une partie arrière d'un turboréacteur. Il convient de noter que cette structure arrière peut intégrer des moyens d'inversion de poussée, étant entendu que l'invention s'applique également au cas d'une nacelle lisse, c'est-à-dire dépourvue de moyens d'inversion de poussée.

Les références AV et AR désignent respectivement les parties avant et arrière de la demi-coquille 1, par rapport au sens du flux d'air destiné à circuler à l'intérieur de cette demi-coquille 1.

En l'occurrence, cette demi-coquille 1 comporte une demi-structure interne 3, définissant une demi-cavité C destinée à recevoir un turboréacteur (non représenté).

Cette demi-coquille 1 comporte également une structure externe 5 définissant, avec la structure interne 3, une demi-veine V destinée à être parcourue par un flux d'air froid circulant entre l'avant et l'arrière de la demi-coquille 1.

Dans sa partie supérieure, c'est-à-dire dans sa partie destinée à être positionnée vers le haut lorsque cette demi-coquille 1 est montée sous l'aile d'un aéronef, cette demi-coquille comporte plusieurs points d'articulation 7 adaptés pour permettre le montage de cette demi-coquille 1 sur le pylône (ou mât) d'une aile d'aéronef (non représentée).

Comme expliqué précédemment, le turboréacteur intègre un ensemble de conduits de circulation d'air de refroidissement à destination d'éléments de carter susceptibles de subir des déformations radiales et/ou longitudinales sous l'influence de la température du turboréacteur.

Cet air de refroidissement est prélevé dans la veine V de circulation du flux froid au moyen d'une écope 100.

L'écope 100 appartient donc à la demi-coquille C et doit assurer l'acheminement de l'air prélevé vers le circuit de refroidissement monté sur le turboréacteur.

Ces deux éléments constituent des sous-ensembles distincts susceptibles d'être animés de mouvements relatifs radiaux et/ou longitudinaux.

En effet, les efforts de dilatation s'exerçant sur le turboréacteur et sur la demi-coquille C, soumise au flux froid, sont très différents.

En raison de ces déplacements, l'écope 100 est raccordé au circuit de distribution d'air de refroidissement par l'intermédiaire d'un joint 101 selon l'invention.

Le joint 101 comprend une platine de montage 102, une partie centrale souple étanche 103 et une surface d'appui 104.

La platine de montage 102 est destinée à assurer la fixation du joint 101 sur l'écope 100. Elle présente pour ce faire une surface sensiblement annulaire ou oblongue adaptée à la forme de l'écope 100, ladite surface étant percée de manière à présenter une pluralité de trous destinés chacun à recevoir un moyen de fixation de type pion 105 traversant chaque trou pour venir pénétrer dans un trou correspondant de l'écope 100 à laquelle il est fixé par l'intermédiaire d'un moyen de fixation complémentaire de type anneau de rétention 105'.

La partie centrale souple 103 constitue la partie joint à proprement parler. Elle présente une forme sensiblement cylindrique et est réalisée à partir de silicone armé de fibres de verre et d'aramide. Elle est constituée d'une paroi externe 106 et d'une paroi interne 107 périphériques se rejoignant au niveau de la surface de montage 102 et de la surface d'appui 104, et délimitant ensemble un espace intérieur 108 vide.

La partie supérieure du joint 101 constitue la surface d'appui 104 destinée à venir au contact du deuxième conduit et comprenant, conformément à l'invention, une plaque renfort 110.

Pour ce faire, la partie centrale 103 en silicone présente dans sa partie supérieure une surépaisseur moulée sur la plaque renfort 110 de manière à l'intégrer au joint 101.

Cette plaque renfort 110 est une tôle inox ajourée formant d'un anneau périphérique. Les lumières pratiquées dans la tôle allège cette pièce rapportée.

Lorsque le joint 101 est soumis à des efforts de compression, la plaque renfort 110 fait écran et empêche la partie centrale 103 s'écrasant de venir déborder sur le deuxième conduit.

Par ailleurs, les déplacements relatifs radiaux engendrent des efforts de friction qui sont maintenant supportés par la plaque renfort 110, plus résistant, et non plus par la matière silicone de la partie centrale 103, fragile.

Bien entendu l'invention n'est pas limitée à la forme de réalisation décrite ci-dessus à titre d'exemple non limitatif mais elle en embrasse toutes les formes de réalisation, comme définies par les revendications.

## Revendications

1. Nacelle pour turboréacteur d'aéronef présentant une structure externe (5) définissant avec une structure interne (3) une veine (V) destinée à être parcourue par un flux d'air froid, ladite nacelle comprenant une première demi-coquille (1) et une deuxième demi-coquille entourant une partie arrière dudit turboréacteur, la demi-coquille (1) étant équipée d'une écope (100) destinée à prélever au moins une partie du flux d'air froid circulant dans la veine (V) et à assurer l'acheminement de l'air prélevé vers un circuit de distribution d'air de refroidissement monté sur le turboréacteur, l'écope et le circuit de distribution étant susceptibles d'être animés de mounvements relatif axiaux et/ou radiaux mais appartenant à un même circuit de distribution d'un fluide, ladite nacelle comprenant un joint (101) d'étanchéité raccordant l'écope (100) au circuit de distribution d'air de refroidissement, ledit joint comprenant une partie centrale (103) souple présentant une forme générale sensiblement cylindrique adaptée à la forme de l'écope et du circuit de distribution et réalisée à partir d'un matériau étanche à l'air, ledit joint présentant, d'un côté, une surface de montage (102) destinée à permettre la fixation du joint à l'écope, et de l'autre côté, une surface d'appui (104) non fixée destinée à venir au contact du circuit de distribution de manière à réaliser une connexion souple étanche entre l'écope et le circuit de distribution, **caractérisé en ce que** la partie centrale comprend une paroi externe (106) et une paroi interne (107) périphériques se rejoignant au niveau de la surface de montage (102) et de la surface d'appui 104, et délimitant ensemble un espace intérieur (108), vide, et **en ce que** la surface d'appui comprend un renfort (110) périphérique s'étendant radialement au moins partiellement au dessus de la paroi externe de la partie centrale de manière à ce que ledit renfort empêche la partie centrale (103) de déborder sur le circuit de distribution lorsque le joint est comprimé.

2. Nacelle selon la revendication 1, **caractérisé en ce que** la surface de montage (102) du joint (101) est réalisée à partir d'un anneau de fixation présentant des trous destinés à recevoir des moyens de fixation (105, 105') aptes à coopérer avec des alésages correspondants du premier conduit (100).

3. Nacelle selon l'une quelconque des revendications 1 ou 2, **caractérisé en ce que** la partie centrale (103) étanche du joint (101) est réalisée à partir de silicone.

4. Nacelle selon l'une quelconque des revendications 1 à 3, **caractérisé en ce que** la partie centrale (103) étanche du joint (101) est réalisée à partir de fibres de verre et/ou de céramiques.

5. Nacelle selon l'une quelconque des revendications 1 à 4, **caractérisé en ce que** la partie centrale (103) étanche du joint (101) est réalisée à partir de fibres aramides.

6. Nacelle selon l'une quelconque des revendications 4 ou 5, **caractérisé en ce que** les fibres utilisées pour la partie centrale (103) du joint (101) sont tissées.

7. Nacelle selon l'une quelconque des revendications 1 à 6, **caractérisé en ce que** le renfort (110) du joint (101) est une tôle réalisée à partir d'acier inox.

8. Nacelle selon l'une quelconque des revendications 1 à 6, **caractérisé en ce que** le renfort (110) comprend une partie périphérique intégrée dans la masse du joint (101).

9. Nacelle selon l'une quelconque des revendications 1 à 8, **caractérisé en ce que** le renfort (110) du joint (101) présente une surface ajourée.

10. Nacelle selon l'une quelconque des revendications 1 à 9, **caractérisé en ce que** le renfort (110) du joint (101) présente un bord périphérique externe muni d'un bord tombé ou d'un raidissement local.

11. Nacelle (101) selon l'une quelconque des revendications 1 à 10, **caractérisé en ce que** le renfort (110) du joint présente une partie périphérique externe raidie.

## Patentansprüche

1. Gondel für ein Turbotriebwerk eines Luftfahrzeugs, die eine externe Struktur (5) aufweist, die mit einer internen Struktur (3) einen Kanal (V) definiert, die dazu bestimmt ist, von einem Kaltluftstrom durchströmt zu sein, wobei die Gondel eine erste Halbschale (1) und eine zweite Halbschale umfasst, die einen hinteren Teil des Turbotriebwerks umschließen, wobei die Halbschale (1) mit einem Leitblech (100) ausgestattet ist, das dazu bestimmt ist, mindestens einen Teil des Kaltluftstroms, der in dem Kanal (V) zirkuliert, zu entnehmen, und die Beförderung der entnommenen Luft in Richtung eines auf dem Turbotriebwerk montierten Kühlluftverteilerkreises sicherzustellen, wobei das Leitblech und der Verteilerkreis imstande sind, von relativen axialen und/oder radialen Bewegungen angeregt zu sein, die aber zu einem selben Verteilerkreis eines Fluids gehören, wobei die Gondel eine Dichtung (101) umfasst, die das Leitblech (100) mit dem Kühlluftverteilerkreis verbindet, wobei die Dichtung einen elastischen zentralen Teil (103) umfasst, der allgemein eine etwa zylindrische Form aufweist, die an die Form des Leitblechs und des Verteilerkreises angepasst ist und aus einem luftdichten Material hergestellt ist, wobei die Dichtung einerseits eine Montagefläche (102) aufweist, die dazu bestimmt ist, die Befestigung der Dichtung am Leitblech zu erlauben, und andererseits eine nicht befestigte Stützfläche (104), die dazu bestimmt ist, mit dem Verteilerkreis derart in Kontakt zu kommen, dass eine elastische dichte Verbindung zwischen dem Leitblech und dem Verteilerkreis entsteht, **dadurch gekennzeichnet, dass** der zentrale Teil eine periphere externe Wand (106) und eine periphere interne Wand (107) umfasst, die sich auf Ebene der Montagefläche (102) und der Stützfläche (104) treffen und gemeinsam einen leeren Innenraum (108) begrenzen und dass die Stützfläche eine periphere Verstärkung (110) umfasst, die sich radial mindestens teilweise über der externen Wand des zentralen Teils derart erstreckt, dass die Verstärkung verhindert, dass der zentrale Teil (103) über den Verteilerkreis übersteht, wenn die Dichtung komprimiert ist.

2. Gondel nach Anspruch 1, **dadurch gekennzeichnet, dass** die Montagefläche (102) der Dichtung (101) aus einem Befestigungsring hergestellt ist, der Löcher aufweist, die dazu bestimmt sind, Befestigungsmittel (105, 105`) aufzunehmen, die imstande sind, mit entsprechenden Bohrungen des ersten Kreises (100) zusammenzuarbeiten.

3. Gondel nach einem der Ansprüche 1 oder 2, **dadurch gekennzeichnet, dass** der dichte zentrale Teil (103) der Dichtung (101) aus Silikon hergestellt ist.

4. Gondel nach einem der Ansprüche 1 bis 3, **dadurch gekennzeichnet, dass** der dichte zentrale Teil (103) der Dichtung (101) aus Glas- und/oder Keramikfasern hergestellt ist.

5. Gondel nach einem der Ansprüche 1 bis 4, **dadurch gekennzeichnet, dass** der dichte zentrale Teil (103) der Dichtung (101) aus Aramidfasern hergestellt ist.

6. Gondel nach einem der Ansprüche 4 oder 5, **dadurch gekennzeichnet, dass** die für den zentralen Teil (103) der Dichtung (101) verwendeten Fasern gewebt sind.

7. Gondel nach einem der Ansprüche 1 bis 6, **dadurch gekennzeichnet, dass** die Verstärkung (110) der Dichtung (101) ein Blech ist, das aus nichtrostendem Stahl hergestellt ist.

8. Gondel nach einem der Ansprüche 1 bis 6, **dadurch gekennzeichnet, dass** die Verstärkung (110) einen peripheren Teil umfasst, der in der Masse der Dichtung (101) integriert ist.

9. Gondel nach einem der Ansprüche 1 bis 8, **dadurch gekennzeichnet, dass** die Verstärkung (110) der Dichtung (101) eine durchbrochene Fläche aufweist.

10. Gondel nach einem der Ansprüche 1 bis 9, **dadurch gekennzeichnet, dass** die Verstärkung (110) der Dichtung (101) einen externen peripheren Rand aufweist, der mit einem gefallenen Rand oder einer lokalen Versteifung ausgestattet ist.

11. Gondel (101) nach einem der Ansprüche 1 bis 10, **dadurch gekennzeichnet, dass** die Verstärkung (110) der Dichtung einen versteiften externen peripheren Teil aufweist.

## Claims

1. An aircraft jet engine nacelle having an outer structure (5) defining, with an inner structure (3), a tunnel (V) designed to be traveled by a cold air flow, said nacelle comprising a first half-shell (1) and a second half-shell surrounding the rear part of said jet engine, the half-shell (1) being equipped with a scoop (100) designed to withdraw at least part of the cold air flow circulating in the tunnel (V) and to convey the withdrawn air toward a cooling air distribution circuit mounted on the jet engine, the scoop and the distribution circuit being able to be driven in axial and/or radial relative movements but belonging to a same circuit for distributing a fluid, said nacelle comprising a sealing device (101) connecting the scoop (100) to the cooling air distribution circuit, said seal comprising a flexible central part (103) having a substantially cylindrical general shape adapted to the shape of the scoop and the distribution circuit and made from an airtight material, said seal having a mounting surface (102) designed to allow fastening of the seal to the scoop on the one hand, and a non-stationary bearing surface (104) designed to come into contact with the distribution circuit so as to form a flexible sealed connection between the scoop and the distribution circuit on the other hand, **characterized in that** the central part comprises a peripheral outer wall (106) and inner wall (107) coming together at the mounting surface (102) and the bearing surface (104), and together defining an empty inner space (108), and **in that** the bearing surface comprises a peripheral reinforcement (110) extending radially at least partially above the outer wall of the central part such that said reinforcement prevents the central part (103) from overhanging the distribution circuit when the seal is compressed.

2. The nacelle according to claim 1, **characterized in that** the mounting surface (102) of the seal (101) is made from a fastening ring having holes intended to receive fastening means (105, 105') capable of cooperating with corresponding bores of the first duct (100).

3. The nacelle according to any one of claims 1 or 2, **characterized in that** the sealed central part (103) of the seal (101) is made from silicone.

4. The nacelle according to any one of claims 1 to 3, **characterized in that** the sealed central part (103) of the seal (101) is made from glass and/or ceramic fibers.

5. The nacelle according to any one of claims 1 to 4, **characterized in that** the sealed central part (103) of the seal (101) is made from aramid fibers.

6. The nacelle according to any one of claims 4 or 5, **characterized in that** the fibers used for the central part (103) of the seal (101) are woven.

7. The nacelle according to any one of claims 1 to 6, **characterized in that** the reinforcement (110) of the seal (101) is a sheet metal made from stainless steel.

8. The nacelle according to any one of claims 1 to 6, **characterized in that** the reinforcement (110) comprises a peripheral part integrated into the mass of the seal (101).

9. The nacelle according to any one of claims 1 to 8, **characterized in that** the reinforcement (110) of the seal (101) has an openwork surface.

10. The nacelle according to any one of claims 1 to 9, **characterized in that** the reinforcement (110) of the seal (101) has an outer peripheral edge provided with a flanged edge or a local stiffener.

11. The nacelle (101) according to any one of claims 1 to 10, **characterized in that** the reinforcement (110) of the seal has a stiffened outer peripheral part.
